# EUROPEAN PATENT SPECIFICATION

(11) **EP 0 618 776 B1**
(45) Date of publication and mention of the grant of the patent: **15.04.1998**
(21) Application number: 93900128.5
(22) Date of filing: 18.12.1992
(51) Int. Cl.: A47J 37/04, A47J 37/12, A21B 5/08, A23L 1/01

(54) **COOKING APPARATUS**
KOCHGERÄT
APPAREIL DE CUISSON

(30) Priority: 20.12.1991 AU PL0127/91
(43) Date of publication of application: 12.10.1994
(73) Proprietor: Vos Industries Pty Ltd, Malaga, Western Australia 6062 (AU)
(72) Inventor: VOS, Peter Martin, Malaga, Western Australia 6062 (AU)
(74) Representative: Livsey, Gilbert Charlesworth Norris
(86) International application number: AU9200669
(87) International publication number: WO9312703

(56) References cited:
- EP-A- 0 226 350
- WO-A-87/06445
- WO-A-89/04131
- US-A- 2 536 630

## Description

The present invention relates to a cooking apparatus.

### FIELD OF INVENTION

The apparatus of the present invention provides a significant alternative to conventional apparatus. The apparatus of the present invention may replace convention immersion type cooking apparatus in which food items to be cooked are placed in a bath, vat or other container containing cooking fluid. A wide range of foods are cooked in such immersion type cooking apparatus and the cooking fluids often used are oil or water. The cooking apparatus of the present invention is arranged such that it may spray or shower food items to be cooked with cooking fluid to thereby effect cooking thereof. The cooking apparatus has been designed to convey food on a conveyor belt thus providing a continuous feed and automated system of cooking. The conveyor belt of the said cooking apparatus is enclosed entirely in the cooking chamber resulting in substantial benefits including the maintenance of heat within the cooking chamber, easy cleaning of the conveyor by enabling it to be simply removed and by maintaining the conveyor within the chamber no oil is carried outside of the cooking chamber and thereby lost and or cooled.

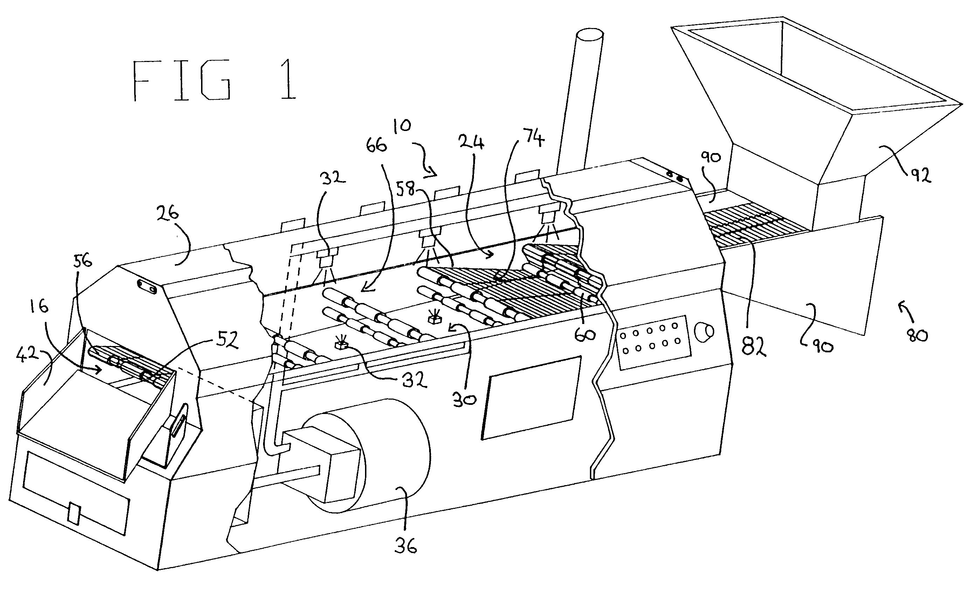

An example of prior art is that disclosed in EP-A-0 226 350 which discloses an oven for preparing food products such as pizza. While this specification does disclose an oven which uses a conveyor to transport food products through the cooking medium, nevertheless, as can be seen clearly in Figure 1, the conveyor is not contained wholly within the housing, thus allowing heat to easily escape and not providing the advantages of the present invention.

In accordance with the present invention there is provided a cooking apparatus comprising:-
a housing having an inlet end and an outlet end; a cooking chamber located within said housing and extending longitudinally between said spaced inlet and outlet ends; a conveyor means to convey food to be cooked through said cooking chamber, said conveyor means being longitudinally disposed between said inlet and outlet ends; loading means to load food into said cooking chamber; and spray means to spray said food with a cooking fluid medium as said food passes through said cooking chamber to cook said food; and the invention is characterised in that said conveyor means is positioned wholly within said housing.

The invention will be described with reference to the drawings in which:
Figure 1 is a perspective view of an embodiment of a cooking apparatus in accordance with the present invention;
Figure 2 is an end view of the cooking apparatus shown in Figure 1;
Figure 3 is a first side view of the cooking apparatus shown in Figure 1;
Figure 4 is a second side view of the cooking apparatus shown in Figure 1; and
Figure 4A is an exploded view of the male and female drive coupling joining the spindle of the conveyor to the drive mechanism.
Figure 5 is a side view of a cooking apparatus in accordance with the present invention similar to Figure 2 but showing an alternative embodiment of a conveyor for the cooking apparatus shown in Figure 1.

### DESCRIPTION OF THE INVENTION

The following description is given by way of example only in embodiments of the cooking apparatus. In the drawings there is shown a cooking apparatus 10 comprising a housing 12 having an inlet end 14 and an outlet end 16 with a cooking chamber 18 therebetween, spray assemblies 20 and 22 and a conveyor 24.

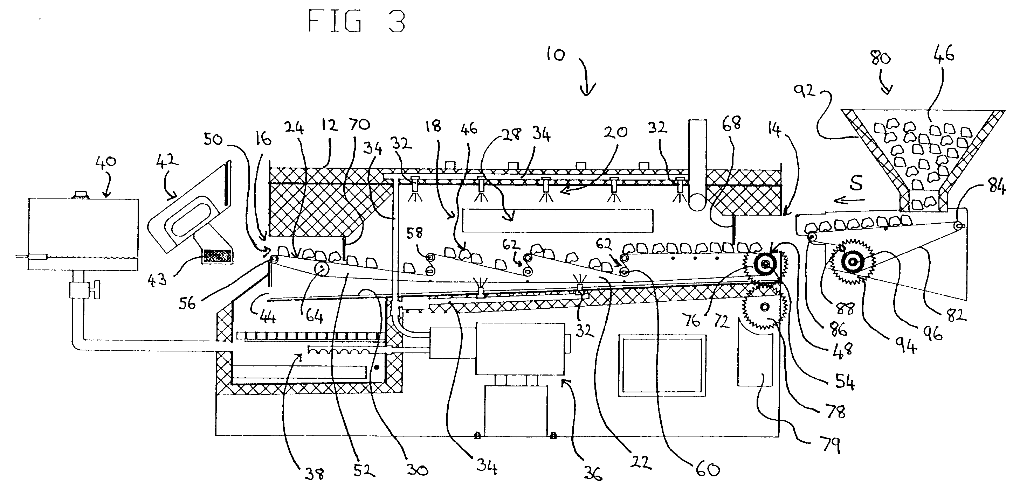

The housing 12 has an openable cover 26 which is hingedly connected to the remainder of the housing 12 at the rear thereof (obscured in Figure 1). A window 28 may be provided in the cover 26 at the front of the housing 12 as is best seen in Figure 3.

A sloped lower surface 30 of the housing 12 is located at the bottom of the cooking chamber 18. The sloped lower surface 30 slopes downwardly in the direction from the inlet end 14 to the outlet end 16.

The spray assemblies 20 and 22 are arranged to spray cooking fluid into the cooking chamber 18.

The spray assembly 20 sprays cooking fluid into the cooking chamber 18 from the upper part thereof and the spray assembly 22 sprays cooking fluid into the cooking chamber 18 from the lower part thereof.

If desired, only the spray assembly 20 may be operated or provided.

The spray asssemblies 20 and 22 comprise spray nozzles 32 and pipes 34 connected thereto to supply the cooking fluid to the nozzles 32. The pipes 34 are connected to a pump and motor assembly shown generally at 36.

The pump and motor assembly 36 is connected to a reservoir or collector/heating arrangement shown generally at 38. However, the details of these components do not form part of the present invention and reference thereto is made simply to enable the operation of the cooking apparatus to be described.

A tank 40, containing the cooking fluid medium may be provided to feed cooking fluid to a reservoir or collector which forms part of the reservoir or collector/heating arrangement 38.

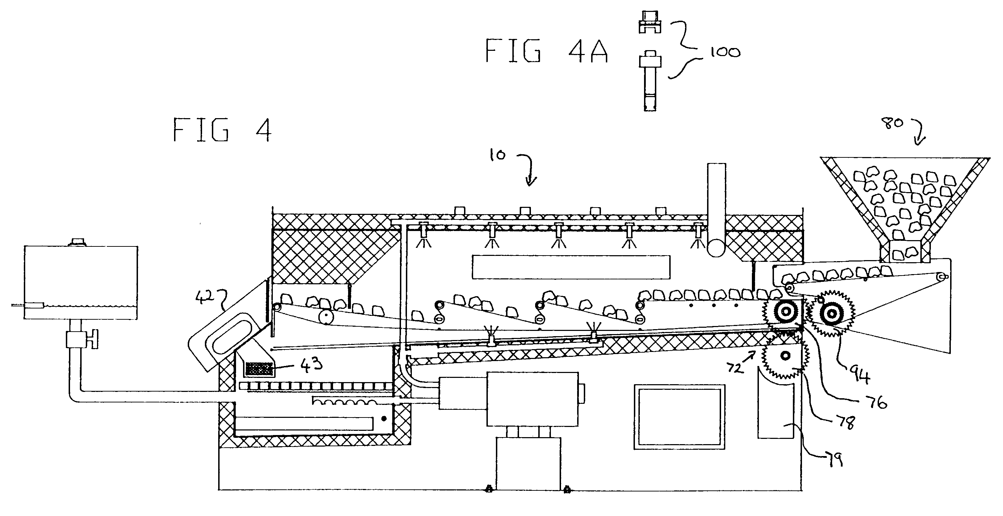

A discharge chute 42 may be provided adjacent the outlet end 16. The discharge chute 42 is removable and is shown in position in Figure 4.

The housing 12 is provided with an opening 44 such that the cooking fluid, after being sprayed from the nozzles 32, can flow along the sloped lower surface 30 through the opening 44 and into the reservoir or collector after first passing through a (removable) filter 43 which extends from the discharge chute 42 into the reservoir or collector.

The opening 44 is positioned at the downstream end of the housing 12 (at the end of the outlet 16) and beneath the conveyor 24.

The conveyor 24 is positioned in the housing 12 such that food items 46 to be cooked may be conveyed through the cooking chamber 18. In doing so, the food items 46 are contacted by the cooking fluid being sprayed from the nozzles 32. In this way the food items 46 are cooked. The conveyor 24 is positioned wholly within the housing 12 such that it is positioned intermediate the inlet 14 and the outlet 16.

The conveyor 24 shown in the drawings has a first end 48 positioned at the inlet end 14 and a second end 50 positioned at the outlet end 16.

The conveyor 24 comprises a conveyor belt 52 which passes around a pair of end rollers 54 and 56. The conveyor 24 further comprises guide rollers 58 and tensioning rollers 60. The conveyor belt 52 passes over and around successive pairs of guide rollers 58 and tensioning rollers 60 to create dips 62 in the path of the conveyor belt 52. However, if desired the dips 62 may be omitted. A wiper roller 64 may be provided to wipe excess cooking fluid from the conveyor belt 52.

The wiper roller 64 is located near the second end 50 of the conveyor 24.

The end rollers 54 and 56, guide rollers 58, tensioning rollers 60 and wiper rollers 64 are held on spindles which are rotatably held between two longitudinal side members 66 of the conveyor 24. One of these longitudinal side members 66 can be seen in Figure 1, the other has been removed for clarity.

The conveyor belt 52 may comprise a wire grid-like mesh as best seen in Figure 1. This wire grid-like mesh enables the conveyor belt 52 to pass over and around the end rollers 54 and 56, guide rollers 58, tensioning rollers 60 and the wiper roller 64.

Whilst the conveyor 24 shown in Figures 1, 3 and 4 has dips 62 provided in the conveyor belt 52, a conveyor of other structure may be used.

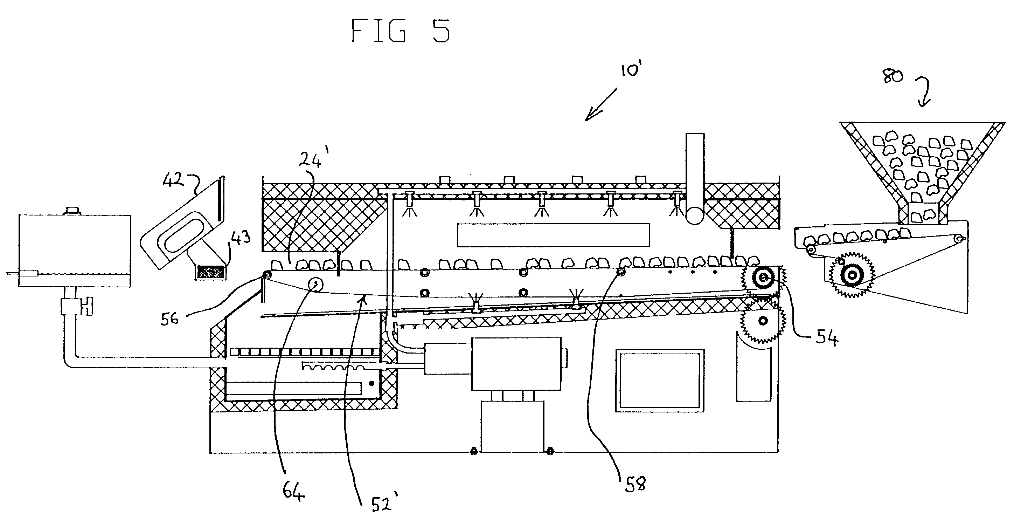

Accordingly, Figure 5 shows a cooking apparatus 10' comprising a conveyor 24' in which the conveyor belt 52' passes around end rollers 54 and 56 and has a flat travel surface without any dips 62.

In other respects, the cooking apparatus 10' and conveyor 24' are like the cooking apparatus 10 and conveyor 24 respectively, and will not be further herein described. Accordingly, the other refernce numerals have been omitted from Figure 5.

The appropriate conveyor can be used depending upon the type of food being cooked.

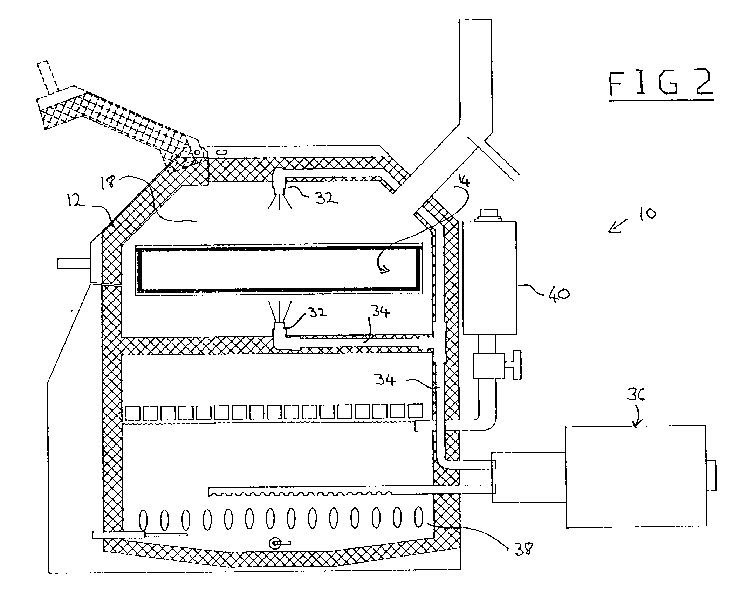

Returning to the description with reference to Figures 1 to 4, flaps 68 and 70 are positioned between the inlet end 14 and the outlet end 16, respectively, to close off the cooking chamber 18.

The cooking apparatus 10 further comprises a drive assembly, shown generally at 72. The drive assembly provides drive to the conveyor 24 so that the conveyor belt 52 moves over the rollers 54, 56, 58 and 60 so that the upper track 74 of the conveyor belt 52 (upon which the food items 46 rest) moves in the direction from the inlet 14 to the outlet 16. The drive assembly 72 may comprise a pair of toothed wheels 76 and 78.

The toothed wheels 76 and 78 mesh. This is best seen in Figure 3. The toothed wheel 76 is connected by a drive shaft to the spindle of the end roller 54 by a male and female drive coupling 100 which enables the conveyor 10 to be easily removed from the cooking chamber 18. The toothed wheels 78 are held in the housing 12 and driven by a motor 79. When this motor 79 is activated drive is transferred from the toothed wheels 78 to the toothed wheels 76 through the male and female drive coupling 100 and spindle end roller 54 to move the conveyor belt 52.

The food items 46 to be cooked may be loaded onto the conveyor belt 52 at the inlet end 14 in any suitable manner. This may be by way of a loading chute (not shown). This loading chute may be positioned at a downwardly inclined angle with its lower end at the inlet 14. The food items 46 are loaded at the other end of the leading chute, e.g. via a hopper, and slide down the loading chute onto the conveyor belt at the inlet end 14. Alternatively, a sub-conveyor 80 (as shown in Figures 1, 3 and 4) may be used.

The sub-conveyor 80 comprises a sub-conveyor belt 82 which passes around a pair of end rollers 84 and 86.

The sub-conveyor 80 further comprises a guide roller 88. The end rollers 84 and 86 and the guide roller 88 are rotatably held between two side plates 90.

A loading hopper 92 may be positioned above the sub-conveyor belt 82.

A toothed wheel 94 is provided on a roller 96.

The toothed wheel 94 is able to mesh with the toothed wheel 76 so that drive is transferred from the toothed wheel 76 to the toothed wheel 96. In this way the sub conveyor belt 82 is caused to move in the direction shown by arrow S in Figure 3. This meshing is best seen in Figure 4.

Figure 4 shows the discharge chute 42 and the sub-conveyor 80 in position, but is in other respects the same as Figure 3, though further reference numerals have been omitted therefrom.

The manner of use and operation of cooking apparatus 10 will now be described.

The cooking fluid is brought to operating temperature by the reservoir or collector/heating arrangement 38 and once this has occurred the drive assembly 72 is activated to move the conveyor belt 52. Food items 46 can then be loaded at the inlet end 14 by way of the loading chute or the sub-conveyor 80. As the food items 46 move along the conveyor belt 52 they are cooked by the cooking fluid being sprayed from the nozzles 32 in the cooking chamber 18. The food items 46 are then discharged by the discharge chute 98 at the outlet end 16. The structure of the conveyor belt 52 permits the sprayed cooking fluid to pass therethrough.

Excess cooking fluid lands at the sloped lower surface 30 of the housing 12 and runs therealong to the opening 44 and passes therethrough back into the reservoir or collector/heating arrangement 38 where it is filtered and re-heated and then recirculated through the pipes 34 to be sprayed once again from the nozzles 32.

In this way, the reservoir or collector/heating arrangement 38 is removed from the cooking chamber and covered by a filter arrangement 43. There is no accumulation of cooking fluid within the cooking chamber or in direct communication with the cooking chamber.

The tank 40 replenishes the supply of cooking fluid to the cooking apparatus 10, as necessary.

Positioning the conveyor 24 wholly within the housing 12 enables the cooking chamber 18 to be effectively sealed.

This can be done by way of the flaps 68 and 70. By sealing the cooking chamber 18 in this manner, it is possible to maintain a more effective temperature control of the cooking chamber 18 which results in more efficient cooking of the food items 46.

Further, the problems associated with oil drip are eliminated since the conveyor 24 is positioned wholly within the housing 12. Thus, there are no portions of the conveyor 24 protruding from the housing 12. The excess oil does not fall or drip from the conveyor 24 to the exterior of the housing 12 but is contained wholly within the housing 12. It runs along the sloped lower surface 30 and passes through the opening 44 into the reservoir or collector/heating arrangement 38.

Thus, it is always contained within the housing 12 and does not soil the floor of the premises in which the cooking apparatus 10 is installed and as it is not exposed to the outside air oil temperature is better maintained.

The conveyor 24 of the present invention also is entirely removable as a unit from the cooking apparatus 10. This is achieved through the use of a male and female drive coupling 100 on the spindle of the end roller 54. This enables the conveyor 24 to be readily exchanged for another conveyor, e.g. a conveyor 24' (which is similarly removable), and also enables it to be readily removed for cleaning or maintenance. This removal further enables the entire interior surfaces of the cooking chamber 18 to be effectively cleaned and access is also possible to the lower nozzles 32.

Modifications and variations such as would be apparent to a skilled addressee are deemed within the scope of the present invention.

## Claims

1. A cooking apparatus (10) comprising:
a housing (12) having an inlet end (14) and an outlet end (16);
a cooking chamber located (18) within said housing (12) and extending longitudinally between said spaced inlet and outlet ends;
a conveyor means (24) to convey food to be cooked through said cooking chamber (18), said conveyor means (24) being longitudinally disposed between said inlet and outlet ends (14, 16);
loading means (80) to load food into said cooking chamber (18); and
spray means (20, 22) to spray said food with a cooking fluid medium as said food passes through said cooking chamber (18) to cook said food;
characterised in that said conveyor means (24) is positioned wholly within said housing (12).

2. The cooking apparatus of claim 1 wherein said conveyor means (24) passes around end rollers (54, 56) revolving around end spindles and is driven from one of the end spindles and connected to a drive by a male and female coupling (100) such that the conveyor means is easily disengageable from the drive mechanism.

3. The cooking apparatus of claim 1 wherein said conveyor means (24) is disengageable from the cooking apparatus.

4. The cooking apparatus of any one of claims 1 to 3 wherein said conveyor means passes over and around successive pairs of guide rollers (58) and tensioning rollers (60) to create a number of dips (62) in the path of the conveyor means (24).

5. The cooking apparatus of any one of claims 1 to 4 wherein the spray means (20, 22) to spray said food with a cooking fluid medium in the cooking chamber are positioned above and below said conveyor means (24).

6. The cooking apparatus according to any one of claims 1 to 5 and including means (38) to collect excess cooking fluid medium for reuse in cooking of food.

7. The cooking apparatus as claimed in any one of claims 1 to 6 and wherein the cooking fluid medium is a liquid.

## Patentansprüche

1. Eine Kochvorrichtung (10) umfassend:
ein Gehäuse (12) mit einem Eingangsende (14) und einem Ausgangsende (16);
eine Kochkammer (18), die in dem Gehäuse (12) angeordnet ist und die sich in Längsrichtung zwischen den voneinander beabstandeten Eingangs- und Ausgangsenden erstreckt;
eine Fördereinrichtung (24), um zu kochende Nahrungsmittel durch die Kochkammer (18) zu fördern, wobei die Fördereinrichtung (24) in Längsrichtung zwischen dem Eingangs- und dem Ausgangsende (14, 16) angeordnet ist;
eine Aufgabeeinrichtung (80), um Nahrungsmittel in die Kochkammer (18) aufzugeben; und
eine Sprüheinrichtung (20, 22), um das Nahrungsmittel mit einem fluiden Kochmedium zu besprühen, während das Nahrungsmittel durch die Kochkammer (18) tritt, um das Nahrungsmittel zu kochen;
dadurch gekennzeichnet, daß die Fördereinrichtung (24) zur Gänze im Gehäuse (12) angeordnet ist.

2. Die Kochvorrichtung von Anspruch 1, bei der sich die Fördereinrichtung (24) um Endrollen (54, 56), die sich um Endspindeln drehen, herum bewegt, durch eine der Endspindeln angetrieben wird und durch eine formschlüssig ineinandergreifende Kupplung (100) mit einem Antrieb verbunden ist, derart, daß die Fördereinrichtung vom Antriebsmechanismus leicht gelöst werden kann.

3. Die Kochvorrichtung von Anspruch 1, bei der die Fördereinrichtung (24) von der Kochvorrichtung lösbar ist.

4. Die Kochvorrichtung nach einem der Ansprüche 1 bis 3, bei der sich die Fördereinrichtung über und um aufeinanderfolgende Paare von Führungsrollen (58) und Spannrollen (60) bewegt, um in der Bahn der Fördereinrichtung (24) eine Reihe von Vertiefungen (62) zu bilden.

5. Die Kochvorrichtung von einem der Ansprüche 1 bis 4, bei der die Sprüheinrichtung (20, 22) zum Besprühen des Nahrungsmittels mit einem fluiden Kochmedium in der Kochkammer über und unter der Fördereinrichtung (24) angeordnet ist.

6. Die Kochvorrichtung nach einem der Ansprüche 1 bis 5 mit einer Einrichtung (98), um überschüssiges, fluides Kochmedium zwecks Wiederverwendung beim Kochen von Nahrungsmittel zu sammeln.

7. Die Kochvorrichtung wie in einem der Ansprüche 1 bis 6 beansprucht und bei der das fluide Kochmedium eine Flüssigkeit ist.

## Revendications

1. Appareil de cuisson (10), comportant:
un logement (12) doté d'une extrémité d'entrée (14) et d'une extrémité de sortie (16);
une chambre de cuisson (18) située à l'intérieur dudit logement (12) et s'étendant longitudinalement entre ladite extrémité d'entrée et ladite extrémité de sortie espacées;
un moyen de transport (24) pour transporter les aliments à cuire à travers ladite chambre de cuisson (18), ledit moyen de transport (24) étant disposé longitudinalement entre ladite extrémité d'entrée et ladite extrémité de sortie (14, 16);
un moyen de chargement (80) pour charger des aliments dans ladite chambre de cuisson (18); et
des moyens de pulvérisation (20, 22) pour pulvériser un agent fluide de cuisson sur lesdits aliments lorsque lesdits aliments traversent ladite chambre de cuisson (18), pour cuire lesdits aliments;
caractérisé en ce que ledit moyen de transport (24) est entièrement disposé à l'intérieur dudit logement (12).

2. Appareil de cuisson selon la revendication 1, dans lequel ledit moyen de transport (24) passe autour de rouleaux d'extrémité (54, 56) tournant autour de broches d'extrémité, est entraîné par l'une des broches d'extrémité et est relié à un entraînement par un accouplement mâle et femelle (100), de telle sorte que le moyen de transport puisse être aisément dégagé du mécanisme d'entraînement.

3. Appareil de cuisson selon la revendication 1, dans lequel ledit moyen de transport (24) peut être dégagé de l'appareil de cuisson.

4. Appareil de cuisson selon l'une quelconque des revendications 1 à 3, dans lequel ledit moyen de transport passe au-dessus et autour de paires successives de rouleaux de guidage (58) et de rouleaux de tension (60), pour créer un certain nombre de puits (62) dans le parcours du moyen de transport (24).

5. Appareil de cuisson selon l'une quelconque des revendications 1 à 4, dans lequel les moyens de pulvérisation (20, 22) servant à projeter un agent fluide de cuisson sur lesdits aliments dans la chambre de cuisson sont disposés au-dessus et en dessous desdits moyens de transport (24).

6. Appareil de cuisson selon l'une quelconque des revendications 1 à 5, et comportant des moyens (38) servant à recueillir l'agent fluide de cuisson en excès pour le réutiliser dans la cuisson d'aliments.

7. Appareil de cuisson selon l'une quelconque des revendications 1 à 6, dans lequel l'agent fluide de cuisson est un liquide.
